# EUROPEAN PATENT SPECIFICATION

(11) **EP 4 184 220 B1**
(45) Date of publication and mention of the grant of the patent: **20.08.2025**
(21) Application number: 22206995.7
(22) Date of filing: 23.11.2020
(51) Int. Cl.: G01V 1/00

(54) **METHODS AND SYSTEMS FOR TIME-EFFICIENT SEISMIC PROSPECTING**
VERFAHREN UND SYSTEME FÜR ZEITEFFIZIENTE SEISMISCHE ERKUNDUNG
PROCÉDÉS ET SYSTÈMES DE PROSPECTION SISMIQUE À EFFICACITÉ TEMPORELLE

(30) Priority: 22.11.2019 US 201962939095 P
(43) Date of publication of application: 24.05.2023
(62) Divisional of application: 20824868.2
(73) Proprietor: INOVA Ltd., George Town, Grand Cayman (KY)
(72) Inventor: AI, Hua, Calgary AB 63H 5M2 (CA); SELVAKUMAR, Arjun, Houston, TX 77025 (US)
(74) Representative: Whitfield, Gillian Janette

(56) References cited:
- EP-A1- 2 695 511
- EP-A1- 3 637 152
- US-A- 5 794 421
- US-A1- 2013 235 701

## Description

### BACKGROUND OF THE DISCLOSURE

### 1. Field of the Disclosure

This disclosure relates generally to systems and methods for efficient operation of equipment used for seismic survey operations.

### 2. Background of the Art

Seismic surveys are conducted to map subsurface structures to identify and develop oil and gas reservoirs. Seismic surveys are typically performed to estimate the location and quantities of oil and gas fields prior to developing (drilling wells) the fields and also to determine the changes in the reservoir over time subsequent to the drilling of wells. For example, seismic surveys in the Middle East and in other regions use vibrator trucks ("vibe trucks") and vibroseis source methods to introduce acoustic energy into the earth so that reflection and refraction seismometry can be employed. In many of these regions, due to the scale and project costs, it is desirable to both the seismic contractor and the end client that the acquisition project be completed quickly and efficiently.

Typically as disclosed in US2013235701, the function of the vibrator truck is to move to shot points and impart a source energy of a given signature into the ground. This process is repeated for all the planned shot points within the survey map. The faster the vibe truck can move to each shot point and initiate the sweep, the higher the productivity achievable by each vibe truck within the acquisition area.

The cycle time between one sweep and the next determines how many sweeps can be carried out in one day. The time duration between the completion of one sweep and the initiation of the next sweep can be viewed as dead time or as an inefficiency. In aspects, the present disclosure provides systems and methods for reducing these inefficiencies.

### SUMMARY OF THE DISCLOSURE

**In** aspects, the present disclosure provides a method for performing a seismic survey. The seismic survey is done using a central control and a seismic source. The seismic source has a vibrator that acoustically couples to the ground using a moveable pad. The method may include the steps of: sending a first message from the seismic source to the central control indicating a time at which the pad is being lowered; estimating a time at which the pad will be acoustically coupled to the ground based on the first message; and sending a message from the central control to the seismic source to begin a sweep, the sweep beginning no sooner than the estimated time.

In further aspects, the present disclosure provides a method according to claim 1 that includes the steps of: mapping a surface of a terrain to be traversed by the truck using at least one sensor carried by the truck; positioning a moveable pad based on the mapped surface to provide a physical gap between the surface and the moveable pad; and traversing the mapped terrain with the truck.

Examples of certain features of the systems, methods and apparatus disclosed herein have been summarized rather broadly in order that detailed description thereof that follows may be better understood, and in order that the contributions to the art may be appreciated. There are, of course, additional features of the disclosure that will be described hereinafter and will form the subject of the disclosure. The summary provided herein is not intended to limit the scope.

### BRIEF DESCRIPTION OF THE DRAWINGS

The novel features of this disclosure, as well as the disclosure itself, will be best understood from the attached drawings, taken along with the following description, in which similar reference characters generally refer to similar elements, and in which:
**FIG. 1** schematically illustrates one embodiment of a seismic survey system in accordance with the present disclosure;
**FIG. 2** schematically illustrates various positions of a pad for a vibrator;
**FIG. 3** illustrates the sequence of events related to performing seismic sweeps using prior art methods;
**FIG. 4** illustrates the sequence of events related to performing seismic sweeps in accordance with one embodiment of the present disclosure;
**FIG. 5** schematically illustrates vibe truck with a pad in a "pad up" position;
**FIG. 6** illustrates a vibe truck that includes sensors for mapping terrain according to one embodiment of the present disclosure; and
**FIG. 7** schematically illustrates pads in a "pad up" position, "intermediate" position, and "pad down" position in accordance with one embodiment of the present disclosure.

### DETAILED DESCRIPTION

The present disclosure relates to devices and methods for controlling activities relating to seismic data acquisition. In particular, the present disclosure is directed to the seismic survey market, especially in super crew market segments, wherein shooting efficiency is a key performance indicator. The teachings of the present disclosure may be applied to reduce delays between sweeps. The present disclosure may be implemented in embodiments of different forms. The drawings shown and the descriptions provided herein correspond to certain specific embodiments of the present disclosure for the purposes of explanation of the concepts contained in the disclosure with the understanding that the present disclosure is to be considered an exemplification of the principles of the disclosure, and is not intended to limit the scope of the disclosure to the illustrated drawings and the description herein. The invention is defined by the appended set of claims.

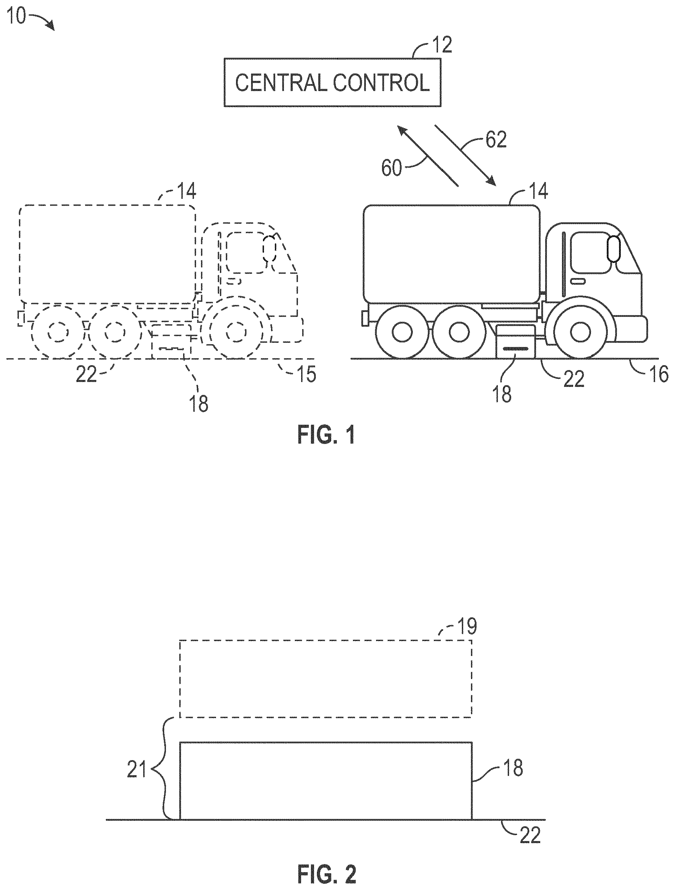

Referring to **FIG. 1****,** a seismic survey system **10** includes a central control **12** and one or more seismic sources **14** conveyed by a vehicle. The seismic source **14** may be a vehicle-conveyed hydraulically powered vibrator that imparts seismic energy into the ground at a selected shot point **16** using a pad **18.** Sometimes, a pad is referred to as a "base plate." In a conventional mode of operation, the seismic source **14** moves between multiple shot points. In **FIG. 1****,** a seismic source **14** drawn in hidden lines is shown at a prior shot point **15.** The pad **18** is shown in a "pad down" position in **FIG. 1****.** In **FIG. 2****,** the pad **18** is shown in the "pad down" position. For reference, a pad **19** drawn in hidden lines is shown in the "pad up" position. Thus, generally, a "shot point" is a physical location on a geographical terrain of interest.

**Referring** to **FIG. 2****,** the pad **18** is shown physically contacting the ground **22,** which is a necessary condition in order to impart seismic energy into the ground **22.** The pad **19** drawn in hidden lines is positioned such that a gap **21** separates the pad **19** and the ground **22.** The position of pad **19** is generally representative of a condition wherein seismic energy cannot be imparted into the ground **22.** The position of pad **19** can occur while the seismic source **14** is moving between shot points (*e.g*., between points **15** and **16** of **FIG. 1**).

In an illustrative operating mode, the seismic source **14** first positions itself at one shot point and lowers the pad to contact the ground **22.** It may take three to 5 seconds or more to move from the position of pad **19** to the position of pad **18.** Once physical contact with the ground **22** and other requirements such as appropriate "hold down" weight is established, the central controller **12 (****FIG. 1****)** sends a signal that initiates a "sweep." For the purposes of the present disclosure, a pad **18** is considered acoustically coupled to the ground **22** after physical contact is established and other criteria such as a minimal hold down weight are present. During a "sweep," the seismic source imparts seismic energy into the ground **22.** A typical "sweep" may last five to twenty seconds. Once the sweep is complete, the pad **18** is lifted off the ground **22** and the seismic source **14** moves to the next shot point.

In aspects, the present disclosure addresses two delay factors in the operation cycle that may get repeated thousands of times a day, which translates into significant shooting efficiency impact.

Referring to **FIG. 1****,** in conventional seismic survey operation modes, the decision to start a sweep is made at a central control **12** instead of at the seismic source **14.** A sweep does not start until the pad **18** is down and the central control **12** is informed of that condition. With prior art systems, several seconds pass while waiting for the pad **18** to contact the ground **22** (or "pad down" process) and several seconds pass until a signal indicative of such contact, (or "ready signal" process) is received at the central control **12.**

In accordance with embodiments of the present disclosure, these two processes occur in parallel so that a ready message **60 (****FIG. 1****)** is sent when the pad down process starts, instead of after the pad down process is completed. In aspects, the ready message does not inform the central control **12** that the seismic source **14** is ready, but rather provide sufficient information to allow the central control **12** to predict when the seismic source **14** is likely to be ready. This may be referred to as a "predictive ready message."

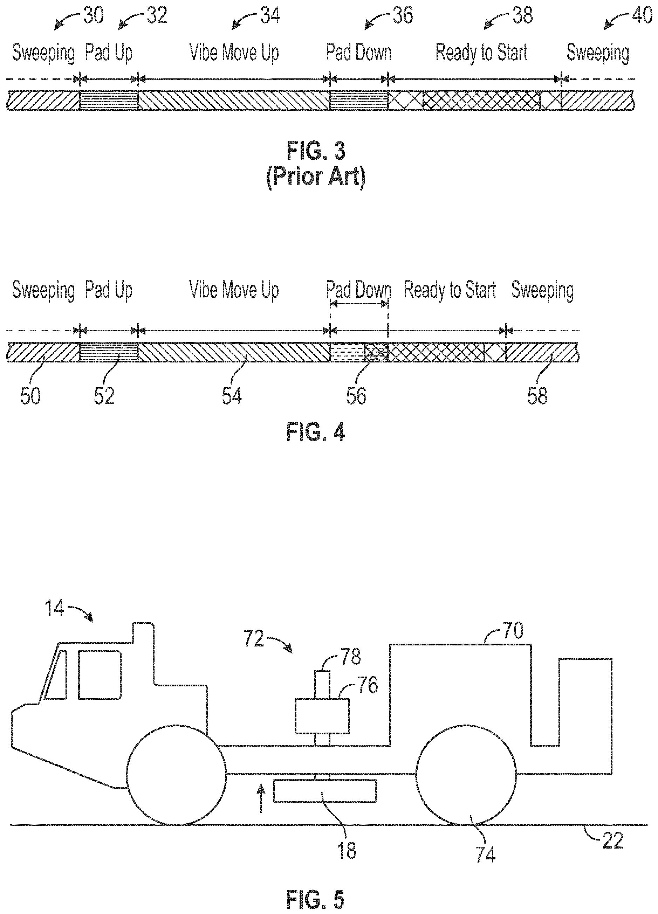

Referring to **FIG. 3****,** there is shown a time chart illustrating a prior art sequence of events for operating a seismic source **14.** Referring to FIGS. **1** and **3****,** in response to a signal from central control **12 (****FIG. 1****),** the seismic source **14** performs a sweep at a first location, *e.g.,* location **15,** which is labeled as event **30.** Event **32** is a lifting of the pad **18** off of the ground **22.** After the pad **18** has been lifted, event **34** is moving the seismic source **14** to the next location, *e.g.,* location **16.** Event **36** is a lowering of the pad **18** into contact with the ground **22.** Once the pad **18** has contacted the ground **22,** event **38** is a transmission of a signal from the seismic source **14** to the central control **12** that the seismic source **14** is ready to perform a sweep. Event **40** includes a signal from the central control **12** to start the sweep and the subsequent sweep.

Referring to **FIG. 4****,** there is shown a time chart illustrating a sequence of events for a operating a seismic source **14** in accordance with embodiments of the present disclosure. Referring to FIGS. **1** and **4****,** in response to a signal from central control **12 (****FIG. 1****),** the seismic source **14** performs a sweep at a first location, *e.g.,* location **15,** which is labeled as event **50.** Event **52** is a lifting of the pad **18** off of the ground **22.** After the pad **18** has been lifted, event **54** is moving the seismic source **14** to the next location, *e.g.,* location **16.** Event **56** involves two actions that occur at or about the same time. The first action is that the seismic source **14** begins to lower the pad **18,** or the "pad down" process. The second action is a message that is sent from the seismic source **14** to the central control **12** that indicates that the pad **18** is being lowered, which is referred to as a "predictive ready message." In one non-limiting method, the predicative ready message contains a timestamp of when the pad down process actually started. In another non-limiting method, the predicative ready message contains a timestamp of when the pad down process is expected to start. The predictive ready signal may also notify the central control **12** of the initial position of the pad **18.**

In one arrangement, the central control **12** may have simulations, test data, and / or actual "in-field" obtained data relating to the operating characteristics and behavior of the seismic source **14.** These may be referred to as "parameters" of the seismic source **14.** For example, the pad vertical position may be measured after the hold down weight is fully applied to the pad. By "fully applied," it is the minimum weight needed in order to apply a specified force to the ground **22.** Based on this information, central control **12** can estimate how long the "pad down" process would take to complete. Thereafter, the central control **12** can use the estimated completion time to determine when a sweep can be started. Event 58, which is the sweep, commences after the seismic source **14** receives a command message **62 (****FIG. 1****)** from the central control **12** to start the sweep. The central control **12** or another information processor may estimate time using one or more parameters of the seismic source, which include, but are not limited to: an initial position of the pad prior to descent, a final position of the pad after descent, distance the pad must travel to move between the initial position and the final position, acceleration of the pad, velocity of the pad, variation in the rate of descent of the pad, expected time the descent will begin, actual time descent began, distance between point when descent began and the next shot point, etc. Thus, in some embodiments, the parameters relate to time, distance, position, speed and acceleration.

**The** performance of the hydraulic system used to lift pad **18** up and lower the pad **18** down may vary from one seismic source **14** to the next, which leads to time variations in pad down process of different seismic sources. If the pad down process takes longer than predicted for whatever reason, the sweep may not start successfully. Therefore, in one variation, to increase the success rate of prediction, the central control **12** may apply a safety margin to the predicted pad down completion time. The safety margin may be, for example, increasing the estimated pad down completion time by five percent or ten percent. As used herein, a "safety margin" is a multiplier applied to an estimated value that accommodates variations in system behavior. Thus, an estimated time of ten seconds and a safety margin of ten percent may result in a predicted time to lower the pad, or pad descent, of eleven seconds.

In a related variation, the applied safety margin may be dynamically adjusted. For example, the actual time required to complete the pad down process may be measured and recorded at each shot location. Tracking records may be established for every seismic source **14** that is being controlled by the central control **12.** Thereafter, the actual time to complete the pad down process may be compared with the estimated pad down process. The difference in time, if any, may be used to reduce or increase the safety margin as needed.

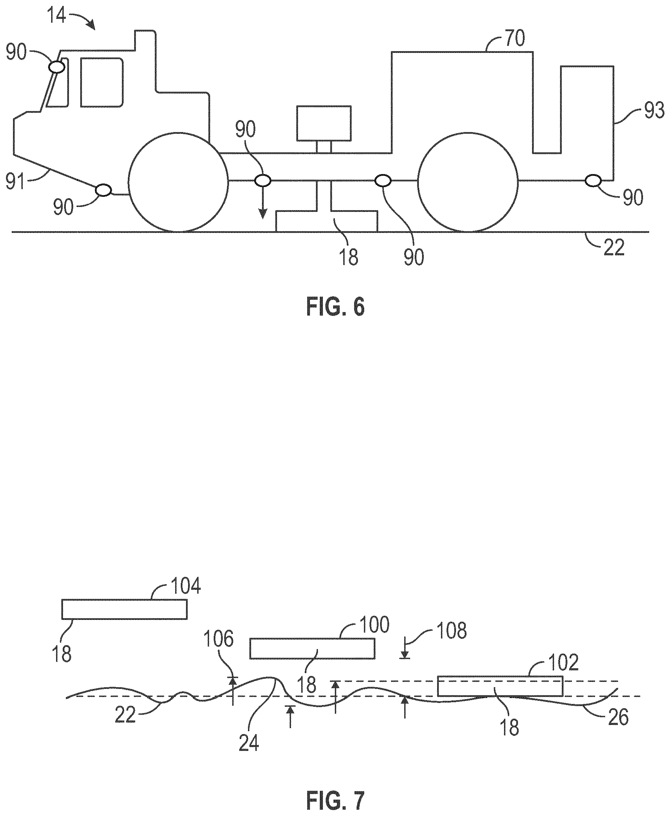

Reductions in delays attributable to moving the pad **18** between two positions may also be obtained using other methods according to the present disclosure. Referring to **FIG. 5****,** a seismic source **14** may be a vibe truck **70** that carries a hydraulically-actuated vibrator **72** that acoustically couples to the ground **22** by using a pad **18.** During operation, after reaching a selected shot point, the vibrator truck **70** utilizes the hydraulically-actuated vibrator **72** to lower the pad **18** toward the ground **22** and into the 'pad down' position. The vibrator **72** continues to apply a hydraulic force until the truck **70** is almost completely lifted off the ground **22** with only a fraction of the weight of the truck **70** being borne by the wheels **74.** The pad **18** becomes the support holding the truck **70** stationary, thus introducing a hold down weight on the pad **18** as shown in **FIG. 6****.**

Next, a reaction mass **76** is hydraulically moved around a piston **78** that is mechanically coupled to the pad **18,** in an oscillatory motion defined by the sweep signature. This motion imparts an equal and opposite force on the pad **18.** Since the pad **18** is acoustically coupled to the ground **22,** this force is transmitted into the ground **22.** Once the sweep duration is completed, the pad **18** is lifted into the 'pad up' position thus lowering the truck **18** fully down and supported only by the wheels **74** as shown in **FIG. 5****.** After the completion of the sweep, the vibrator truck **70** is driven to the next shot point and the sweep is once again imparted into the ground **22.**

Lowering the pad **18** or raising the pad **18** can take several seconds. When the total cycle time is in the order of fifteen to thirty seconds, three to five seconds for each pad movement can significantly impact the total cycle time and thus the overall productivity that can be achieved.

In accordance with the present disclosure, sensory systems are used to position the pad **18** to minimize the amount of lowering and raising that must be done while performing sweeps. **FIG. 6** illustrates sensors **90** that may be positioned at different locations on the truck **70.** These sensors **90** may include ultrasonic sensors, which are near field proximity sensors that provide a range of 5cm up to 2m. Other sensors may include Infrared, radar and LiDAR sensors, which provide a forward-looking ranging information of few meters to 50 meters. One or more of these sensors may also be used for vehicle guidance, automation, safety and monitoring terrain conditions.

One non-limiting arrangement includes integrating sensing and imaging technologies such as Radar, LiDAR, Visible and IR spectrum cameras such that near field terrain mapping is imaged and appropriate precautions taken. This is desirable for at least two reasons: 1) to ensure driver/operator safety and asset protection in avoiding potential damage caused to the vehicle in rugged, non-paved fields and 2) to provide confidence to the seismic contractor with the 'near-autonomous' operation of the vehicle.

Referring to **FIG. 7****,** during operation, terrain condition and measurements are used to calculate an intermediate position **100** or 'hover' position for the pad **18.** An intermediate position is a position wherein the pad **18** is neither in physical contact with the ground **22,** the "pad down" position **102,** nor raised to point where the pad **18** cannot be raised further, or the "pad up" position **104.** In one illustrative method, the intermediate position is calculated using a moving average of the ground clearance measurements from the underbody ultrasonic sensors **90.** Referring to FIGS. **6** and **7****,** a statistical averaging and representative method such as but not limited to weighted moving average (WMA) is computed using the near field sensor measurements that indicate peaks **24** to valleys **26** from the sensors **90** in a front **91** and at a rear **93** of the vehicle **70** with a higher bias given to the forward sensors **90** in order to estimate a WMA value **106,** all calculated relative to the mean ground level. A safety margin is added to create an adequate clearance **108** underneath the pad and the ground being traversed. The mean ground level is updated based on the resting position of the pad on the ground before the vehicle is lifted up. The updated value is compared to the calculated main and corrections are adaptively made

A safety margin may be added; *e.g.,* a fifty or one hundred percent factor is applied such that adequate clearance is present underneath the pad **18** and the ground **22** being traversed. Additionally, the LiDAR cameras providing imaging and ranging in front of the vehicle **70** up to a distance of **50**m is used to anticipate any sudden changes in the terrain such as a dip or mound or an obstacle that is small enough to pass under the truck **70** but high enough to strike the pad **18** in the intermediate position **100.**

The pad 18 may be maintained in the intermediate position 100 in between sweeps and lowered to the 'DOWN' position during a sweep. Based on terrain conditions, the pad 18 may not be required to travel the full distance when adequate ground clearance is available. Thus, pad 18 travel time is reduced and total cycle time inefficiency is reduced. For example, in the fully 'pad up' position 104, typical ground clearance underneath the pad 18 can be around 0.5m. In many cases, the local ground variability is in the order of 10-20cms or less. As such 2 seconds could be saved within a 17 second cycle time. Moreover, when the vehicle 70 has completed the sweep, the pad 18 need only clear a distance 24 above the mean ground level, before the vehicle 70 can be driven forward. The vibe truck operator does not need to wait until the entire distance 108 is cleared by the pad 18 prior to being driven forward.

The present teachings takes into consideration the terrain conditions and to operate the pad **18** at an optimal position that is within the safe operation of the truck **70** while at the same time minimizing pad-down delays. The optimal positioning may also minimize costly damage and delays resulting in repairing the truck **70** and / or the equipment carried by the truck **70.** Lastly, operational consistency can be maintained avoiding variability seen with operators' skill levels and their handling of the vibe truck.

From the above, it should be appreciated that the present disclosure provides systems and methods that efficiently raise and lower a pad before and after a sweep. Inventive aspects include, but are not limited to: using proximity sensors such as ultrasonic sensors in the underbody of a vehicle; calculating a mean ground clearance using the proximity sensors as the vehicle is in forward motion; using the peak to valley ground clearance information and the mean and adding a safety margin such that an 'safe' ground clearance value is calculated; holding the pad at a position such that this safe clearance is maintained, which reduces the time for the pad to be moved for sweeping; and using LiDAR information to anticipate sudden changes in ground clearance within a range of 50m in front of the vehicle and using that information to take safety precautions of lifting the pad to a higher.

From the above, it should be appreciated that what has been described include a method for performing a seismic survey using a central control and a seismic source. The seismic source has a vibrator that acoustically couples to the ground using a moveable pad. The method includes the steps of: sending a first message from the seismic source to the central control indicating a time at which the pad is being lowered; estimating a time at which the pad will be acoustically coupled to the ground based on the first message; and sending a message from the central control to the seismic source to begin a sweep, the sweep beginning no sooner than the estimated time.

In embodiments, the time is estimated using at least one operating parameter of the seismic source; the estimated time includes a margin of safety; the estimated time is updated based on pad position measurements in the pad down position after the hold down weight is fully applied; the first message include an actual time at which the pad began being lowered; and / or the first message includes a predicted time at which the pad will be lowered. In embodiments, the method may include the steps of operating the seismic source at a first shot point; and moving the seismic source to a second shot point, wherein the first message is sent before the seismic source arrives at the second shot point.

From the above, it should be appreciated that what has been described also includes a method for performing a seismic survey using a central control and a seismic source carried by a truck. The seismic source has a vibrator that acoustically couples to the ground using a moveable pad. The method includes the steps of: mapping a surface of a terrain to be traversed by the truck using at least one sensor carried by the truck; positioning a moveable pad based on the mapped surface to provide a physical gap between the surface and the moveable pad; and traversing the mapped terrain with the truck.

In embodiments, the moveable pad can be positioned at a pad down position, the movable pad physically contacts the ground and a pad up position, the movable pad is furthest from the pad down position, and the moveable pad is positioned at an intermediate position between the pad down position and the pad up position based on the mapped surface. In embodiments, the method includes the steps of
operating the seismic source at a first shot point; moving the seismic source to a second shot point; and moving the pad from the pad down position to the intermediate position while moving the seismic source to the second shot point. In embodiments, the method includes the steps of moving the pad from the intermediate position to the pad down position after the seismic source arrives at the second shot point or moving the pad from the intermediate position to the pad down position before the seismic source arrives at the second shot point.

In embodiments, the moveable pad is positioned using a safety margin and / or the pad position measurements in the pad down position prior to hold down weight being applied are used to update the calculated mean ground level.

From the above, it should be appreciated that the present disclosure includes teachings relating to reduce delays associated with lowering and raise the pad, thus speeding up the cycle of sweeps and moving to a new shot point. The disclosure herein is provided in reference to particular embodiments and processes to illustrate the concepts and methods.

## Claims

1. A method for performing a seismic survey using a central control (12) and a seismic source (14) carried by a truck, the seismic source (14) having a vibrator that acoustically couples to the ground using a moveable pad (18), comprising:
mapping a surface of a terrain to be traversed by the truck using at least one sensor (90) carried by the truck;
positioning a moveable pad (18) based on the mapped surface to provide a physical gap between the surface and the moveable pad (18), **characterized in that** the moveable pad (18) is configured to be positioned at: (i) a pad down position (102), wherein the movable pad (18) physically contacts the ground and (ii) a pad up position (104), wherein the moveable pad (18) is furthest from the pad down position (102), and wherein the moveable pad (18) is positioned at an intermediate position between the pad down position (102) and the pad up position (104) based on the mapped surface; and
traversing the mapped terrain with the truck.

2. The method of claim 1, further comprising:
operating the seismic source (14) at a first shot point;
moving the seismic source (14) to a second shot point; and
moving the pad (18) from the pad down position (102) to the intermediate position while moving the seismic source (14) to the second shot point.

3. The method of claim 2, further comprising: moving the pad (18) from the intermediate position to the pad down position (102) after the seismic source (14) arrives at the second shot point.

4. The method of claim 2, further comprising: moving the pad (18) from the intermediate position to the pad down position (102) before the seismic source (14) arrives at the second shot point.

5. The method of claim 1, wherein the moveable pad (18) is positioned using a safety margin.

6. The method of claim 1, wherein the pad position measurements in the pad down position (102) prior to hold down weight being applied are used to update the calculated mean ground level.

## Patentansprüche

1. Verfahren zur Durchführung einer seismischen Untersuchung unter Verwendung einer zentralen Steuerung (12) und einer seismischen Quelle (14), die von einem Lastkraftwagen getragen wird, wobei die seismische Quelle (14) einen Schwingungserzeuger aufweist, der unter Verwendung einer beweglichen Unterlage (18) akustisch an den Boden gekoppelt ist, umfassend:
Kartieren einer Oberfläche eines Geländes, das von dem Lastkraftwagen durchfahren werden soll, unter Verwendung von mindestens einem Sensor (90), der von dem Lastkraftwagen getragen wird;
Positionieren einer beweglichen Unterlage (18) basierend auf der kartierten Oberfläche, um einen physischen Spalt zwischen der Oberfläche und der beweglichen Unterlage (18) bereitzustellen, **dadurch gekennzeichnet, dass** die bewegliche Unterlage (18) konfiguriert ist, um
positioniert zu werden an: (i) einer Unterlage-unten-Position (102), wobei die bewegliche Unterlage (18) physisch den Boden berührt, und (ii) einer Unterlage-oben-Position (104), wobei die bewegliche Unterlage (18) am weitesten von der Unterlage-unten-Position (102) entfernt ist und wobei die bewegliche Unterlage (18) an einer Zwischenposition zwischen der Unterlage-unten-Position (102) und der Unterlage-oben-Position (104) basierend auf der kartierten Oberfläche positioniert ist; und
Durchqueren des kartierten Geländes mit dem Lastkraftwagen.

2. Verfahren nach Anspruch 1, ferner umfassend:
Betreiben der seismischen Quelle (14) an einem ersten Schusspunkt;
Bewegen der seismischen Quelle (14) zu einem zweiten Schusspunkt; und
Bewegen der Unterlage (18) von der Unterlage-unten-Position (102) in die Zwischenposition, während die seismische Quelle (14) zu dem zweiten Schusspunkt bewegt wird.

3. Verfahren nach Anspruch 2, ferner umfassend: Bewegen der Unterlage (18) von der Zwischenposition in die Unterlage-unten-Position (102), nachdem die seismische Quelle (14) an dem zweiten Schusspunkt angekommen ist.

4. Verfahren nach Anspruch 2, ferner umfassend: Bewegen der Unterlage (18) von der Zwischenposition in die Unterlage-unten-Position (102), bevor die seismische Quelle (14) an dem zweiten Schusspunkt ankommt.

5. Verfahren nach Anspruch 1, wobei die bewegliche Unterlage (18) unter Verwendung einer Sicherheitsmarge positioniert wird.

6. Verfahren nach Anspruch 1, wobei die Unterlagenpositionsmessungen der Unterlage-unten-Position (102) vor dem Aufbringen eines Niederhaltegewichts verwendet werden, um das berechnete mittlere Bodenniveau zu aktualisieren.

## Revendications

1. Procédé permettant de réaliser une étude sismique à l'aide d'une commande centrale (12) et d'une source sismique (14) portée par un camion, la source sismique (14) comportant un vibreur qui se couple acoustiquement au sol à l'aide d'un patin mobile (18), comprenant :
la cartographie d'une surface d'un terrain devant être traversé par le camion à l'aide d'au moins un capteur (90) porté par le camion ;
le positionnement d'un patin mobile (18) sur la base de la surface cartographiée pour fournir un espace physique entre la surface et le patin mobile (18), **caractérisé en ce que** le patin mobile (18) est conçu pour être
positionné au niveau de : (i) une position basse du patin (102), ledit patin mobile (18) entrant physiquement en contact avec le sol et (ii) une position haute du patin (104), ledit patin mobile (18) étant le plus éloigné de la position basse du patin (102), et ledit patin mobile (18) étant positionné au niveau d'une position intermédiaire entre la position basse du patin (102) et la position haute du patin (104) sur la base de la surface cartographiée ; et
la traversée du terrain cartographié avec le camion.

2. Procédé de la revendication 1, comprenant en outre :
le fonctionnement de la source sismique (14) au niveau d'un premier point de tir ;
le déplacement de la source sismique (14) vers un second point de tir ; et
le déplacement du patin (18) de la position basse du patin (102) à la position intermédiaire tout en déplaçant la source sismique (14) vers le second point de tir.

3. Procédé de la revendication 2, comprenant en outre : le déplacement du patin (18) de la position intermédiaire à la position basse du patin (102) après que la source sismique (14) arrive au niveau du second point de tir.

4. Procédé de la revendication 2, comprenant en outre : le déplacement du patin (18) de la position intermédiaire à la position basse du patin (102) avant que la source sismique (14) arrive au niveau du second point de tir.

5. Procédé de la revendication 1, ledit patin mobile (18) étant positionné à l'aide d'une marge de sécurité.

6. Procédé de la revendication 1, lesdites mesures de position du patin dans la position basse du patin (102) avant l'application du poids de maintien étant utilisées pour mettre à jour le niveau moyen calculé du sol.
